# EUROPEAN PATENT SPECIFICATION

(11) **EP 3 260 751 B1**
(45) Date of publication and mention of the grant of the patent: **15.04.2020**
(21) Application number: 17177733.7
(22) Date of filing: 23.06.2017
(51) Int. Cl.: F16L 1/20, B65B 35/04, B65H 49/28, H02G 1/10, B65H 49/24

(54) **ADJUSTABLE MODULAR BASKET CAROUSEL SYSTEM AND METHOD FOR INSTALLING SAID SYSTEM ON A VESSEL**
KARUSSELLSYSTEM MIT VERSTELLBAREM MODULAREM KORB UND VERFAHREN ZUR INSTALLATION DES SYSTEMS AUF EINEM SCHIFF
SYSTÈME DE CARROUSEL À PANIER MODULAIRE RÉGLABLE ET PROCÉDÉ D'INSTALLATION DUDIT SYSTÈME SUR UN RÉCIPIENT

(30) Priority: 23.06.2016 NL 1041943
(43) Date of publication of application: 27.12.2017
(73) Proprietor: Oceanteam Shipping B.V., 1013 BX Amsterdam (NL)
(72) Inventor: van Doorn, Alex, 1013 BX Amsterdam (NL)
(74) Representative: V.O.

(56) References cited:
- WO-A1-01/87704
- WO-A2-2009/129223
- Oceanteamsolutions.Com: "4000 T Modular Turntable", , 18 January 2016 (2016-01-18), XP055412444, Retrieved from the Internet: URL:http://www.oceanteamsolutions.com/uplo ads/documents/4000T_Turntable_Cirkel_DTP.p df [retrieved on 2017-10-04]
- Oceanteamsolutions.Com: "Oceanteamsolutions turntables :: offshore turntables, tensioners and reels", , 18 January 2016 (2016-01-18), XP055412463, Retrieved from the Internet: URL:http://web.archive.org/web/20160118075 751/www.oceanteamsolutions.com/turntables [retrieved on 2017-10-04]
- Oceanteamsolutions.Com: "2000 T Modular Turntable", , 18 January 2016 (2016-01-18), XP055412450, Retrieved from the Internet: URL:http://www.oceanteamsolutions.com/uplo ads/documents/2000T_Turntable_DTP.pdf [retrieved on 2017-10-04]
- Rentocean: "Introducing Oceanteam Solutions on Vimeo", , 9 March 2016 (2016-03-09), XP055412379, Retrieved from the Internet: URL:https://web.archive.org/web/2016030923 0328/https://vimeo.com/148346670 [retrieved on 2017-10-04]

## Description

The invention is related to a method for installing an adjustable modular basket carousel system on a vessel.

Basket carousel systems are generally known. They generally comprise a grillage arranged to be fixated, or commonly called sea-fastened, on a deck of the vessel, for example by welding or by any other fixation method. The system further comprises a basket for receiving a cable, for example for storage, such as off-shore power cables, umbilical cables, flexible pipes or any other subsea cables. The basket is mountable on the grillage, which is configured to support the basket, distributing weight of the basket and the cable over the grillage and deck of the vessel. The basket is rotatable around a vertical axis to allow spooling and unspooling of the cable in and out of the basket. To smooth rotation of the basket, the system may further include a rolling assembly. Such a rolling assembly may comprise a plurality of wheels configured to engage a corresponding rolling surface, which wheels may be mounted on one of the grillage and a bottom side of the basket, and which corresponding rolling surface may be arranged on the other of the grillage and the bottom side of the basket.

A problem of such a basket carousel system is that the system is large, heavy and/or bulky. The system requires a plurality of largely dimensioned components making transport thereof difficult and/or expensive. Also, these systems may be built up, at least partially, on deck of the vessel, which is time consuming and during which the vessel cannot be operational, resulting in an undesirable long downtime of the vessel. Furthermore, a diameter of such a basket carousel is fixed, independently of the required diameter in view of the cable to be spooled. This may lead to a waste of space and to additional weight onboard the vessel.

In order to mitigate some of these problems, an adjustable and modular basket carousel system has been developed as disclosed in the document WO 2009/129223. The system comprises concentric support rings and a series of triangular subassemblies, among other elements. The carousel is built up from the inside working outward by adding triangular subassemblies. All elements of the system can be transported in regular containers. A diameter of the system may be adjusted during assembly to match project specific requirements reducing the deck space for the carousel. However, due to the relatively high number of elements of the system and its geometry, the construction is rather slack and lacks stiffness so that it cannot be safely moved after assembly. As a result, the system must be assembled on the deck of the vessel. But due to the rather complex structure of the basket, which also makes it complicated and expensive to work with, assembly of the adjustable modular basket carousel system might take relatively long, which may cause an undesirably long downtime of the vessel.

It is an aim of the present invention to solve or alleviate one or more of the above-mentioned problems. Particularly, the invention aims at providing a more efficient method for installing an adjustable modular basket carousel system on a vessel, which can combine stiffness of the system, a relative ease of transport of the system, and a relatively swift installation, reducing downtime of the vessel.

To this aim, according to a first aspect of the present invention, a method is provided for installing an adjustable modular basket carousel on a vessel characterized by the features of claim 1. Further advantages of this first aspect of the invention are provided by the features of the dependent claims 2-10 and 13. By entirely mounting the adjustable modular basket carousel system on-shore and lifting the system as a whole onto the vessel, downtime of the vessel can considerably be limited, which also reduces installation costs of the system. At the same time, a diameter of the system can be adjusted during installation without jeopardizing the stiffness of the system, for example during placement onboard a vessel.

The grillage comprises a pivot on which the basket is rotatable. Said pivot can for example be solid cylindrically shaped block. A plurality of beams radially extends from said pivot. Said beams extend from the pivot, preferably over a same radius, or over different radii, for example from the pivot to one of a plurality of support beams, which the grillage comprises. The plurality of support beams is connected to said radially extending beams, said plurality of support beams being substantially in parallel with one of said radially extending beams. Said support beams may be directed along a chord or secant line of the substantially circularly shaped basket of the carousel system, the support beams having a length which may be shorter, substantially similar or longer than such a chord. As such, the beams may extend from under the basket when mounted, or may be entirely under the basket. The grillage is preferably positioned on a deck such that said support beams are substantially in parallel with a longitudinal axis of the vessel.

A diameter of the system is adjusted by extending at least one of said plurality of radially extending beams, and/or at least one of said plurality of support beams. Extending said beams may be done in many different ways, for example by telescopically extending said beams, by unfolding extension elements, or preferably by mounting extension elements to ends of one or more of said beams radially extending from said pivot, and/or to ends one or more of said support beams. Said extension elements are preferably beams which are similar to, or substantially the same as, the beams they are to be mounted on, but only shorter in length. The extension elements may be connected to ends of the beams, and in line with said beams, for example by pins or bolts, i.e. bolted flanges or by any other suitable connecting means known to the person skilled in the art.

A diameter of the system can also be adjusted by mounting at least two further support beams to the grillage, at least one on each side of, and substantially in parallel with, said plurality of support beams. Addition of these further support beams can enlarge the grillage in a direction transverse to the orientation of the support beams in a relatively simple way. Preferably, a diameter of the system is adjusted both by extending at least one of the beams comprised in the grillage and by mounting further support beams to the grillage. In this way, a diameter of the system can be adjusted without having to provide elements which are substantially different from the elements already comprised in the system, i.e. such as beams and connecting means, which can considerably reduce manufacturing costs.

The basket can comprise a inner core arranged to rotate on the pivot of the grillage. The inner core can include vertically extending beams and/or plate-like elements. A diameter of the inner core can be made adjustable, and is chosen in function of the minimum allowable bending radius of the cable to be received in the basket. The basket further comprises adjustable bottom beams radially extending from said inner core, as well as a side wall including a plurality of vertically extending beams, each beam being mounted to an end of one said adjustable bottom beams. The use of beams may have the advantage of saving weight in comparison with the use of plate-like elements.

A diameter of the system may be adjusted by extending said adjustable bottom beams. Said bottom beams may for example be telescopically extendable bottom beams. Preferably, said bottom beams are extended by mounting extension elements to ends of said adjustable bottom beams. Said extension elements are preferably beams which are similar to, or substantially the same as, the beams they are to be mounted on, but only shorter in length. The extension elements may be connected to ends of the beams, and in line with said beams, for example by pins or bolts, i.e. bolted flanges or by any other suitable connecting means known to the person skilled in the art. It will be clear to the person skilled in the art that, when said adjustable bottom beams are extended, the vertically extending beams of the side wall are mounted to an end of the extended bottom beams, i.e. to an end of said extension elements. When adjusting a diameter of the system, extension elements are preferably mounted to all of the adjustable bottom beams, and said extension elements are preferably all of a same length, depending on the desired increase in diameter of the system. This is not the case for the extension elements mountable on the grillage, where not all radially extending beams or support beams need to be extended to obtain an increase in diameter of the system. Nor do all the extension elements for the grillage need to have a same length.

A rolling assembly including a plurality of rollers may be mounted on the grillage, preferably on the radially extending beams of the grillage, such that at least one substantially polygonal or substantially circular track of rollers, as seen in a top or bottom view, is formed centered on the pivot. The substantially polygonal or substantially circular track of rollers could also be considered as a sort of "circular row", the rollers being "aligned" on a track approaching the shape of a circle. Said track of rollers, which rollers are spaced-apart, is configured to engage a corresponding track on the basket, such that the basket can rotate smoothly on the grillage. Preferably, a roller box including a pair of rollers is provided on each radially extending beam of the grillage. The roller box may be positioned substantially transversally to the radially extending beam, each roller of the pair of rollers being positioned on either side of the radially extending beam. In this way, as the radially extending beams are preferably equally distributed around the pivot, the rollers can also be positioned at a substantially equal distance from each other. Alternatively, the rolling assembly may be mounted to the bottom beams of the basket, the rollers or wheels being arranged to roll on a corresponding track on the grillage.

A diameter of the system can be adjusted by mounting on the grillage a further substantially polygonal or substantially circular track of rollers having a larger diameter than, and substantially concentric with, said at least one polygonal or substantially circular track of rollers. In this way, the rolling assembly can continue to provide a smooth rotation of the basket on the grillage in spite of a higher diameter, and thus weight, of the system.

A plurality of transverse beams is mounted on the basket, each beam extending substantially transversally between two of said radially extending and adjustable bottom beams, such as to form at least one continuous surface track arranged to be engaged by said plurality of rollers of the rolling assembly mounted on the grillage. Whereas the plurality of rollers of the rolling assembly form a discontinuous track of rollers, the transverse beams are preferably mounted such as to form a continuous surface, to be engaged by the rollers of the rolling assembly to ensure a smooth rotation of the basket on the grillage. Said continuous surface, as seen in a top or bottom view, can preferably have the shape of a polygonal, approaching a substantially circular shape.

A diameter of the system can be adjusted by forming at least one further continuous surface track having a diameter that is larger than said at least one continuous surface track. The number of continuous surface tracks preferably matches the number of tracks of rollers to ensure a smooth rotation of the basket on the grillage and to better distribute an increase in weight of a system with a larger diameter.

A height of the vertically extending beams of the basket is adjustable. In this way, the basket can receive a longer cable for a same diameter, which can save space on deck. However, the increase in height is limited by the increase in weight which can be supported by the grillage. Since the area of the bottom of the basket is quadratic with the diameter, the storage volume and maximum weight of a cable in the basket will increase quadratically with the diameter, if the height remains unchanged. An increase of the diameter of the system by a factor 1.4 can provide twice the load capacity. As the number of rollers of the rolling assembly may be increased by three, the average load per wheel in a larger configuration can be reduced by a factor 2/3. Therefore, the increase in height of the basket is especially useful in combination with an increase in diameter. A height of the vertically extending beams of the basket may preferably be extended by mounting extension elements to an upper free end of said vertical beams, i.e. the end which is opposite the end mounted on the bottom beams of the basket.

A diameter of the system can preferably be adjusted by mounting extension elements to ends of one or more of said beams radially extending from said pivot, of said support beams, and/or of said adjustable bottom beams. As previously explained, said extension elements are preferably beams which are similar to, or substantially the same as, the beams they are to be mounted on, but only shorter in length. The extension elements may be connected to ends of the beams, and in line with said beams, for example by pins or bolts, i.e. bolted flanges or by any other suitable connecting means known to the person skilled in the art. In fact, in this ways, substantially the entire system can be made of beams of different lengths which can be bolted together, which can reduce manufacturing costs of the system.

Before assembly of the system, the system may thus be arranged to fit in a container suitable for road and/or sea transport, such as for example standardized ISO containers. A maximum length of the different beams can be adapted such as to fit in such a container, which can provide relatively easy transport of the system to an assembly site, thus reducing costs of transport.

In summary, in a very advantageous embodiment of the method for installing an adjustable modular basket carousel system on a vessel, a standard container containing all the construction elements for the system is transported to an assembly site, preferably to a quay. On the assembly site, the grillage can be assembled for a first diameter of the system. If the desired diameter of the system is larger than the first diameter, extension elements can be mounted to ends of one or more of the extending beams of the grillage as well as to ends of one or more of the support beams. Additionally, further support beams may be mounted to the grillage on either side of, and substantially in parallel with, the plurality of support beams already mounted. At the same time, the basket of the system may be mounted by first mounting the adjustable bottom beams to the inner core, then adjust a length of the adjustable bottom beams to a desired diameter by mounting extension elements to all of said bottom beams. Then vertically extending beams can be mounted to ends of said bottom beams to form the side wall of the basket. Optionally, a height of the side wall may be adjusted by mounting further extension elements to the vertically extending beams. Then the entire system can be lifted on board of a vessel, where the grillage can be fixated to the deck of the vessel. Alternatively, the grillage may first be lifted on the vessel and fixated to the deck, after which the basket can be lifted and mounted on the grillage. The cable to be received in the basket may be inserted before or after lifting the system on the vessel.

According to a further aspect of the invention, an adjustable modular basket carousel system is provided as defined by the features of claim 11. Further advantages of this aspect of the invention are provided by the features of dependent claim 12.

The present invention will be further elucidated with reference to figures of exemplary embodiments. Corresponding elements are designated with corresponding reference signs. Therein,
Figure 1 shows a top view and a side view of a general arrangement of a carousel on board of an installation vessel according to prior art;
Figure 2 shows an isometric view of a carousel according to prior art;
Figure 3 shows an isometric view of a detail of a grillage with two roller boxes according to prior art;
Figures 4a, 4b and 4c show a top view of the grillage under the carousel according to the invention;
Figures 5a, 5b and 5c show a top view and a side view of the basket of the carousel according to the invention.

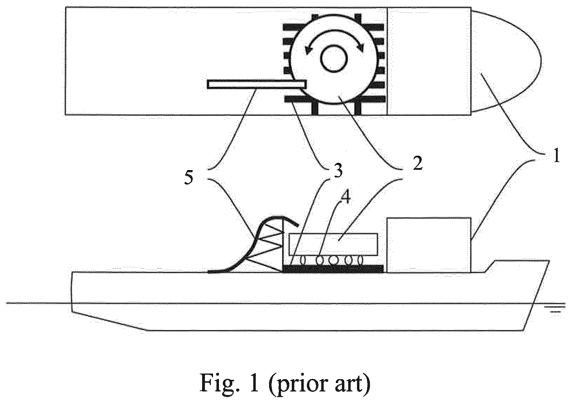

The carousel onboard of the installation vessel (1) shown in figure 1 includes the vessel basket (2) and grillage frame (3) supporting the basket on wheels (4), which enable the rotation of the basket, as indicated by the arrow. The rotation can be driven by electrical motors in one or more wheels, by a rack-and-pinion drive around the carousel, or by a chain around the carousel driven by an electrical motor. The loading tower (5) is used to support the cable and to control the cable spooling in or out of the basket. The two main functions of the carousel are the storage of a cable and spooling the cable in or out by rotation around a vertical axis. Carousels are used in a wide range of storage capacities between several hundreds of tons up to 10,000 tons of cable. The weight of the carousel is in the order of 10% of the storage capacity. The two main parts of the carousel are the basket and the grillage under the basket, which provides a distributed support of the basket and transfers the weight load distributed over the deck of the ship. The basket comprises a bottom structure, an inner core and an outer wall, and can be built from steel plate or from steel beams. Wheel supports under the basket enable the rotation of the carousel. The minimum radius of the inner core is determined by the allowable minimum bending radius of the cable, which can vary in the range of approximately 2 to 5 m. The outer radius is limited by the width of the installation vessel. For most cable installation vessels this is less than 35m. The height of the carousel is limited by the maximum height of the centre of gravity and by the maximum stack height of cable defined by the compression strength of the cable. The compression load due to weight of the cable shall not exceed compression strength. The cable is spooled in the carousel by using a guiding structure, whereby the lowest layer is wound from the inside to the outside, the second from the outside to the inside, and so on reversing the direction each layer. The point where the winding direction reverses in each layer is determined by the inner core and a vertical wall at the outside of the basket. Most carousels according to prior art are constructed as a complete unit which is lifted in one piece on board of an installation vessel. The complete unit cannot be transported by road or train, but only by boat. The carousel remains on a fixed position for a long period of time or even its entire lifetime. The size is therefore determined by the largest and longest cable envisaged. The disadvantage is that this takes a lot of space and load capacity on board of the installation vessel, while most of the time the carousel has an unused overcapacity.

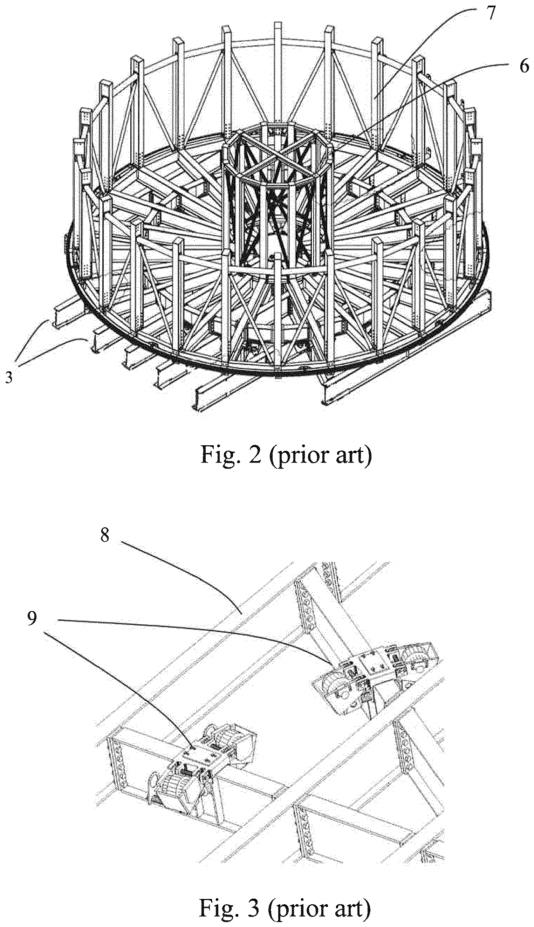

Figure 2 shows more details of a carousel according to prior art. The above disadvantages are sometimes mitigated in state of art technology by building the carousel from modular elements such that it can be transported by ship, train or truck in standard containers. The construction elements comprise only few types which are standard size. A key element for the efficiency of this concept is that the time for assembly and disassembly is short. The disadvantage remains that the size of the carousel is fixed and the capacity can only be changed by modification of the carousel by shortening or lengthening construction elements. In this embodiment the inner core (6) and outer wall (7) are constructed from vertical beams with I-shape cross sections. The grillage (3) supporting the basket is also constructed from beams with I-shaped cross sections. The maximum lengths of all beams are shorter than 12 m and the beam connections are made by bolts. This allows the complete structure to be disassembled and placed in a standard container for transportation.

The detail of the grillage frame (3) according to prior art shown in figure 3 shows two roller boxes (9) with two wheels each to support the basket (2) on top of the grillage frame (3). In total for example 12 of such roller boxes are placed in one or more circular rows to enable the rotation of the basket. In this example the frame is constructed from simple straight I-shaped beams (8) which are connected by bolted flanges. The grillage frame (3) can therefore be disassembled to be placed in containers for transportation.

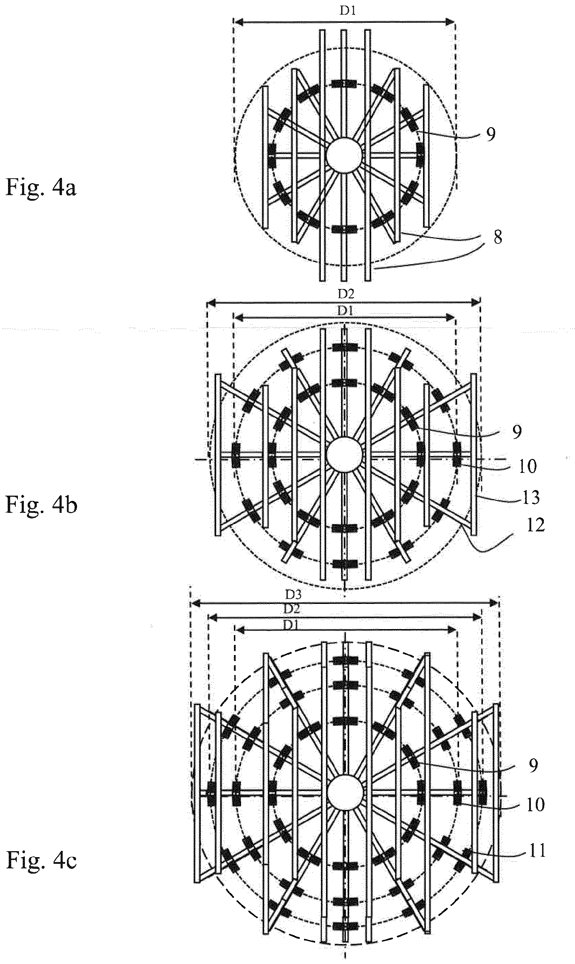

The pattern of the beams (8) of the grillage (3) and connections according to the invention are arranged such that they rest on top of the deck frames of the vessel, as these are the strongest points of the deck. The size of the grillage can be extended by lengthening the grillage beams by extensions (12) and adding new beams (13) allowing the installation of additional circular rows (10 and 11) of roller boxes at regular spacing under the basket. The diameter D1 in figure 4a represents the smallest outer diameter of the basket to be placed on top. The diameters D2 and D3 represent the larger baskets according to the invention. In a preferred embodiment of the invention the diameter D2 corresponds to the diameter of the second row of wheels (10) in figure 4b and the diameter D3 corresponds to the third row of wheels (11) in figure 3c. In this way the positions of the wheels are under the corner edge of the basket, which is a strong location providing a continuous support surface for rolling contact of the wheels. If the basket is enlarged from a diameter D1 to D2, the continuous support surface at D1 is available for the second row of wheels (10). Similar, the surface at D2 can be available for the circular row of wheels (11) if the basket is further enlarged from diameter D2 to D3.

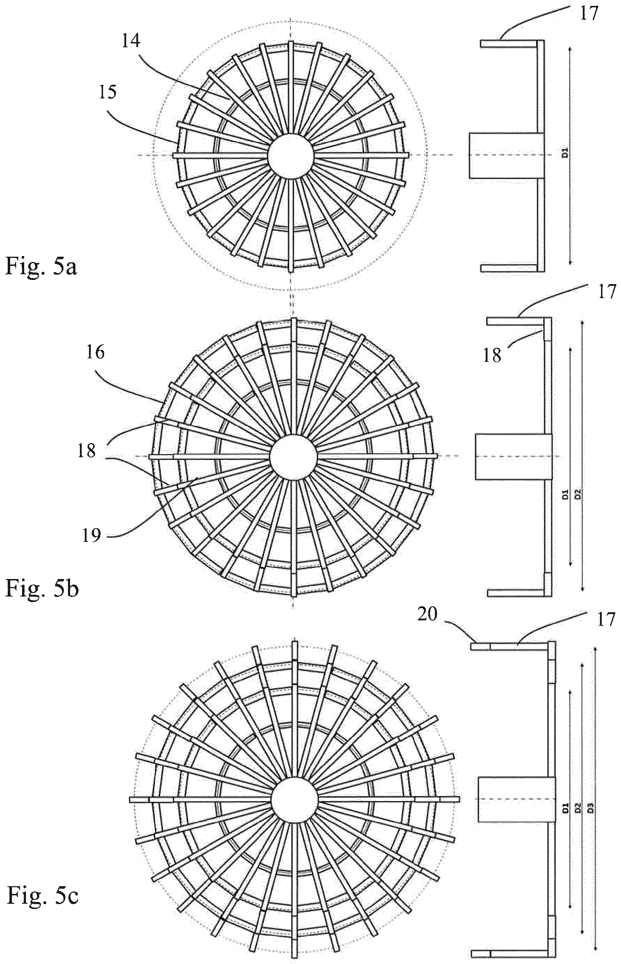

The basket of the carousel according to the invention with variable diameter D1, D2 and D3 is shown in the figures 5a, 5b and 5c. In the smallest configuration of figure 5a, the basket is supported by a row of roller boxes (9) at the continuous circular surface (14). The corner (15) of the basket provides a suitable surface for the second row of wheels (10) if the basket is enlarged to a diameter D2 or D3. Similar, the corner (16) of the basket provides a suitable surface for the third row of wheels (11) if the basket is enlarged to a diameter D3.

The vertical beams (17) in figures 5a and 5b forming the outer wall of the basket can be moved to a new location on top of extension beams (18) of the radial beams (19) in the bottom of the basket.

The carousel according to the invention can be adjusted to two or more outside diameters and the height of the carousel can be increased. E.g. the diameter can be 18m, providing a loading capacity of about 2000 tons, the diameter can be 22m, providing a load capacity of about 3000 tons or the diameter can be 25m, providing a capacity of 4000 tons of cable. For the 18m assembly, the basket can be supported on a single circular row of wheels, while for the 22m a second circular row of wheels is added and for the 25 m basket a third row of wheels is added.

Since the area of the bottom of the basket is quadratic with the diameter, the storage volume and maximum weight of the cable in the basket will increase quadratic with the diameter, if the height remains unchanged. For example, an increase of D1 of 18m by a factor 1.4 to D3 of 25m will provide (25/18) to the power of 2, which is about twice the load capacity. As the number of wheels in the largest configuration in fig 5c is 3 times the number of wheels in the smallest configuration fig 5a, the average load per wheel in the largest configuration has reduced by a factor 2/3. Therefore the basket capacity may be enlarged further by the extension of the vertical beams (17) by using extension beams (20). Thus the invention can provide a flexible solution for installation of an adjustable modular basket carousel which can be adjusted in size by adding or removing modular construction elements which are relatively simple and cheap.

For the purpose of clarity and a concise description, features are described herein as part of the same or separate embodiments, however, it will be appreciated that the scope of the invention as defined in the following claims may include embodiments having combinations of all or some of the features described. It may be understood that the embodiments shown have the same or similar components, apart from where they are described as being different.

In the claims, any reference signs placed between parentheses shall not be construed as limiting the claim. The word 'comprising' does not exclude the presence of other features or steps than those listed in a claim. Furthermore, the words 'a' and 'an' shall not be construed as limited to 'only one', but instead are used to mean 'at least one', and do not exclude a plurality. The mere fact that certain measures are recited in mutually different claims does not indicate that a combination of these measures cannot be used to an advantage. Many variants will be apparent to the person skilled in the art and are understood to be comprised within the scope of the invention defined in the following claims.

## Claims

1. Method for installing an adjustable modular basket carousel system on a vessel, wherein said adjustable modular basket carousel system includes a grillage (3) arranged to be fixated on a deck of the vessel and a basket (2) for receiving a cable, which basket (2) is mountable on the grillage (3) and rotatable around a vertical axis, the method comprising the steps of:
- mounting the adjustable modular basket carousel system while adjusting a diameter of the system;
- lifting the mounted modular basket carousel system and placing said system on a deck of the vessel;
- fixating the adjustable modular basket carousel system on the deck of the vessel,
wherein the adjustable modular basket carousel system is entirely mounted on-shore and lifted as a whole onto the vessel, wherein the grillage (3) comprises a pivot on which the basket (2) is rotatable, a plurality of beams (8) radially extending from said pivot, as well as a plurality of support beams connected to said radially extending beams, said plurality of support beams being substantially in parallel with one of said radially extending beams, wherein a diameter of the system is adjusted by extending at least one of said plurality of radially extending beams (8), and/or at least one of said plurality of support beams.

2. Method according to claim 1, wherein a diameter of the system is adjusted by mounting at least two further support beams to the grillage, at least one on each side of, and substantially in parallel with, said plurality of support beams.

3. Method according to any of the preceding claims, wherein the basket (2) comprises a inner core arranged to rotate on the pivot of the grillage (3), adjustable bottom beams radially extending from said inner core and a side wall including a plurality of vertically extending beams, each beam being mounted to an end of one said adjustable bottom beams.

4. Method according to claim 3, wherein a diameter of the system is adjusted by extending said adjustable bottom beams.

5. Method according to any of the claims 1 - 4, wherein a rolling assembly including a plurality of rollers is mounted on the grillage (3), preferably on the radially extending beams of the grillage, such that at least one substantially polygonal or substantially circular track of rollers is formed centered on the pivot.

6. Method according to claim 5, wherein a diameter of the system is adjusted by mounting on the grillage a further polygonal or substantially circular track of rollers having a larger diameter than, and substantially concentric with, said at least one polygonal or substantially circular track of rollers.

7. Method according to at least claims 3 and 5, wherein a plurality of transverse beams is mounted on the basket, each beam extending substantially transversally between two of said radially extending and adjustable bottom beams, such as to form at least one continuous surface track arranged to be engaged by said plurality of rollers of the rolling assembly mounted on the grillage (3).

8. Method according to claim 7, wherein a diameter of the system is adjusted by forming at least one further continuous surface track having a diameter that is larger than said at least one continuous surface track.

9. Method according to any of the preceding claims 3-8, wherein a height of the vertically extending beams of the basket is adjustable.

10. Method according to at least claim 1 or 3, wherein a diameter of the system is adjusted by mounting extension elements to ends of one or more of said beams radially extending from said pivot, of said support beams, and/or of said adjustable bottom beams.

11. Adjustable modular basket carousel system for storage of a cable on a vessel (1), comprising a grillage arranged to be fixated on a deck of the vessel and a basket for receiving the cable, which basket is mountable on the grillage (3) and rotatable around a vertical axis, wherein the grillage (3) comprises a pivot on which the basket (2) is rotatable, a plurality of beams (8) radially extending from said pivot, as well as a plurality of support beams (8) connected to said radially extending beams, said plurality of support beams being substantially in parallel with one of said radially extending beams, basket (2) comprises a inner core arranged to rotate on the pivot of the grillage (3), adjustable bottom beams radially extending from said inner core and a side wall including a plurality of vertically extending beams, each beam being mounted to an end of one said adjustable bottom beams, wherein a diameter of said adjustable modular basket carousel system is adjustable between at least a first diameter and a second diameter larger than said first diameter, wherein the grillage (3) comprises a pivot on which the basket (2) is rotatable, a plurality of beams (8) radially extending from said pivot, as well as a plurality of support beams connected to said radially extending beams, said plurality of support beams being substantially in parallel with one of said radially extending beams, wherein a diameter of the system is adjustable by extending at least one of said plurality of radially extending beams (8), and/or at least one of said plurality of support beams.

12. Adjustable modular basket carousel system according to claim 11, wherein the diameter of the system is adjustable by mounting extension elements to ends of one or more of said beams radially extending from said pivot, of one or more of said support beams, and/or of one or more of said adjustable bottom beams.

13. Method for installing an adjustable modular basket carousel system according to any of the claims 1 - 10, the method comprising, arranging the system in a container suitable for road and/or sea transport, before assembly of the system, by adapting a maximum length of the different beams such as to fit in such a container.

## Patentansprüche

1. Verfahren zum Installieren eines einstellbaren modularen Korbkarussellsystems auf einem Schiff, wobei das einstellbare modulare Korbkarussellsystem einen Trägerrost (3) umfasst, der so angeordnet ist, dass er an einem Deck des Schiffes befestigt ist, und einen Korb (2) zum Aufnehmen eines Kabels umfasst, welcher Korb (2) auf dem Trägerrost (3) montierbar und um eine vertikale Achse drehbar ist, wobei das Verfahren die folgenden Schritte umfasst:
- Montieren des einstellbaren modularen Korbkarussellsystems, während ein Systemdurchmesser eingestellt wird;
- Heben des montierten modularen Korbkarussellsystems und Platzieren des Systems auf einem Deck des Schiffes;
- Befestigen des einstellbaren modularen Korbkarussellsystems am Deck des Schiffes,
wobei das einstellbare modulare Korbkarussellsystem vollständig an Land montiert und als Ganzes auf das Schiff gehoben wird, wobei der Trägerrost (3) einen Drehpunkt, auf dem der Korb (2) drehbar ist, wobei sich mehrere Balken (8) von dem Drehpunkt radial erstrecken, sowie mehrere Stützbalken umfasst, die mit den sich radial erstreckenden Balken verbunden sind, wobei die mehreren Stützbalken im Wesentlichen parallel zu einem der sich radial erstreckenden Balken sind, wobei ein Durchmesser des Systems durch das Erstrecken von wenigstens einem von mehreren sich radial erstreckenden Balken (8) und/oder wenigstens einen von mehreren Stützbalken eingestellt wird.

2. Verfahren nach Anspruch 1, wobei ein Durchmesser des Systems eingestellt wird, indem wenigstens zwei weitere Stützbalken auf dem Trägerrost montiert werden, wenigstens einer auf jeder Seite und im Wesentlichen parallel zu den mehreren Stützbalken.

3. Verfahren nach einem der vorhergehenden Ansprüche, wobei der Korb (2) einen inneren Kern umfasst, der so angeordnet ist, dass er sich auf dem Drehpunkt des Trägerrosts (3) dreht, einstellbare untere Balken, die sich radial von dem inneren Kern erstrecken, und eine Seitenwand, die mehrere sich vertikal erstreckende Balken umfasst, wobei jeder Balken an einem Ende eines der einstellbaren unteren Balken montiert ist.

4. Verfahren nach Anspruch 3, wobei ein Durchmesser des Systems durch das Erstrecken der einstellbaren unteren Balken eingestellt wird.

5. Verfahren nach einem der Ansprüche 1 bis 4, wobei eine Rollenanordnung mit mehreren Rollen auf dem Trägerrost (3) montiert ist, vorzugsweise an den sich radial erstreckenden Balken des Trägerrosts, so dass wenigstens eine im Wesentlichen polygonale oder im Wesentlichen kreisförmige Spur von Rollen auf dem Drehpunkt zentriert ausgebildet ist.

6. Verfahren nach Anspruch 5, wobei ein Durchmesser des Systems durch Montieren einer weiteren polygonalen oder im Wesentlichen kreisförmigen Spur von Rollen mit einem größeren Durchmesser als und im Wesentlichen konzentrisch zu der wenigstens einen polygonalen oder im Wesentlichen kreisförmigen Spur von Rollen auf dem Trägerrost eingestellt wird.

7. Verfahren nach wenigstens den Ansprüchen 3 und 5, wobei mehrere Querbalken an dem Korb montiert sind, wobei sich jeder Balken im Wesentlichen quer zwischen zwei der sich radial erstreckenden und einstellbaren unteren Balken erstreckt, um wenigstens eine durchgehende Oberflächenbahn auszubilden, die so angeordnet ist, dass sie von mehreren Rollen der auf dem Trägerrost (3) montierten Rollenanordnung in Eingriff gebracht wird.

8. Verfahren nach Anspruch 7, wobei ein Durchmesser des Systems eingestellt wird, indem wenigstens eine weitere durchgehende Oberflächenspur mit einem Durchmesser gebildet wird, der größer ist als die wenigstens eine durchgehende Oberflächenspur.

9. Verfahren nach einem der vorhergehenden Ansprüche 3 bis 8, wobei eine Höhe der sich vertikal erstreckenden Balken des Korbs einstellbar ist.

10. Verfahren nach wenigstens Anspruch 1 oder 3, wobei ein Durchmesser des Systems eingestellt wird, indem Verlängerungselemente an Enden eines oder mehrerer der Balken montiert werden, die sich radial von dem Drehpunkt der Stützbalken und/oder der einstellbaren unteren Balken erstrecken.

11. Einstellbares modulares Korbkarussellsystem zur Lagerung eines Kabels auf einem Schiff (1), umfassend einen Trägerrost, der so angeordnet ist, dass er an einem Deck des Schiffes befestigt wird, und einen Korb zum Aufnehmen des Kabels, wobei der Korb auf dem Trägerrost (3) montierbar und um eine vertikale Achse drehbar ist, wobei der Trägerrost (3) einen Drehpunkt umfasst, auf dem der Korb (2) drehbar ist, mehrere Balken (8), die sich radial von dem Drehpunkt erstrecken, sowie mehrere Stützbalken (8), die mit den sich radial erstreckenden Balken verbunden sind, wobei die mehreren Stützbalken im Wesentlichen parallel zu einem der radial verlaufenden Balken sind, wobei Korb (2) einen inneren Kern umfasst, der so angeordnet ist, dass er sich am Drehpunkt des Trägerrosts (3) dreht, einstellbare untere Balken, die sich radial von dem inneren Kern erstrecken, und eine Seitenwand, die mehrere sich vertikal erstreckende Balken umfasst, wobei jeder Balken an einem Ende eines der einstellbaren unteren Balken montiert ist, wobei ein Durchmesser des einstellbaren modularen Korbkarussellsystems zwischen wenigstens einem ersten Durchmesser und einem zweiten Durchmesser einstellbar ist, der größer als der erste Durchmesser ist, wobei der Trägerrost (3) einen Drehpunkt umfasst, auf dem der Korb (2) drehbar ist, mehrere Balken (8), die sich radial von dem Drehpunkt erstrecken, sowie mehrere Stützbalken, die mit den sich radial erstreckenden Balken verbunden sind, wobei mehrere Stützbalken, die im Wesentlichen parallel zu einem der sich radial erstreckenden Balken sind, wobei ein Durchmesser des Systems durch Verlängern wenigstens eines der mehreren sich radial erstreckenden Balken (8) und/oder wenigstens eines der mehreren Stützbalken einstellbar ist.

12. Einstellbares modulares Korbkarussellsystem nach Anspruch 11, wobei der Durchmesser des Systems durch Montieren von Verlängerungselementen an Enden eines oder mehrerer der Balken, die sich radial von dem Drehpunkt erstrecken, eines oder mehrerer der Stützbalken und/oder eines oder mehrerer der einstellbaren unteren Balken einstellbar ist.

13. Verfahren zum Installieren eines einstellbaren modularen Korbkarussellsystems nach einem der Ansprüche 1 bis 10, wobei das Verfahren das Anordnen des Systems in einem für den Straßen- und/oder Seetransport geeigneten Behälter vor dem Zusammenbau des Systems durch Anpassen einer maximalen Länge von verschiedenen Balken, um in einen solchen Behälter zu passen, umfasst.

## Revendications

1. Procédé d'installation d'un système de carrousel à panier modulaire réglable sur un navire, dans lequel ledit système de carrousel à panier modulaire réglable comprend un grillage (3) agencé pour être fixé sur un pont du navire et un panier (2) pour recevoir un câble, lequel panier (2) étant susceptible d'être monté sur le grillage (3) et de tourner autour d'un axe vertical, le procédé comprenant les étapes consistant à :
- monter le système de carrousel à panier modulaire réglable tout en ajustant un diamètre du système;
- lever le système de carrousel à panier modulaire monté et placer ledit système sur un pont du navire;
- fixer le système de carrousel à panier modulaire réglable sur le pont du navire,
dans lequel le système de carrousel à panier modulaire réglable est entièrement monté à terre et soulevé dans son ensemble sur le navire, dans lequel le grillage (3) comprend un pivot sur lequel le panier (2) peut tourner, une pluralité de poutres (8) s'étendant radialement à partir dudit pivot, ainsi qu'une pluralité de poutres de support connectées auxdites poutres s'étendant radialement, ladite pluralité de poutres de support étant sensiblement parallèle à l'une desdites poutres s'étendant radialement, dans lequel un diamètre du système est réglable en étendant au moins l'une de ladite pluralité de poutres s'étendant radialement (8), et/ou au moins l'une de ladite pluralité de poutres de support.

2. Procédé selon la revendication 1, dans lequel un diamètre du système est ajusté en montant au moins deux autres poutres de support sur le grillage, au moins une de chaque côté de, et sensiblement en parallèle avec, ladite pluralité de poutres de support.

3. Procédé selon l'une quelconque des revendications précédentes, dans lequel le panier (2) comprend un noyau interne agencé pour tourner sur le pivot du grillage (3), des poutres inférieures réglables s'étendant radialement depuis ledit noyau interne et une paroi latérale comprenant une pluralité de poutres s'étendant verticalement, chaque poutre étant montée à une extrémité de l'une desdites poutres inférieures réglables.

4. Procédé selon la revendication 3, dans lequel un diamètre du système est ajusté en étendant lesdites poutres inférieures réglables.

5. Procédé selon l'une quelconque des revendications 1 à 4, dans lequel un ensemble de roulement comprenant une pluralité de rouleaux est monté sur le grillage (3), de préférence sur les poutres s'étendant radialement du grillage, de telle sorte qu'au moins une piste sensiblement polygonal ou sensiblement circulaire de rouleaux est formée centrée sur le pivot.

6. Procédé selon la revendication 5, dans lequel un diamètre du système est ajusté en montant sur le grillage une autre piste polygonale ou sensiblement circulaire de rouleaux ayant un diamètre plus grand que, et sensiblement concentrique avec, ladite au moins une piste polygonale ou sensiblement circulaire de rouleaux.

7. Procédé selon au moins les revendications 3 et 5, dans lequel une pluralité de poutres transversales est montée sur le panier, chaque poutre s'étendant sensiblement transversalement entre deux desdites poutres inférieures s'étendant radialement et réglables, de manière à former au moins une piste de surface continue agencé pour être engagé par ladite pluralité de rouleaux de l'ensemble de roulement monté sur le grillage (3).

8. Procédé selon la revendication 7, dans lequel un diamètre du système est ajusté en formant au moins une autre piste de surface continue ayant un diamètre qui est plus grand que ladite au moins une piste de surface continue.

9. Procédé selon l'une quelconque des revendications précédentes 3 à 8, dans lequel une hauteur des poutres s'étendant verticalement du panier est réglable.

10. Procédé selon au moins la revendication 1 ou 3, dans lequel un diamètre du système est ajusté en montant des éléments d'extension aux extrémités d'une ou plusieurs desdites poutres s'étendant radialement depuis ledit pivot, desdites poutres de support, et/ou desdites poutres inférieures réglables.

11. Système de carrousel à panier modulaire réglable pour le stockage d'un câble sur un navire (1), comprenant un grillage disposé pour être fixé sur un pont du navire et un panier pour recevoir le câble, ce panier pouvant être monté sur le grillage (3) et pouvant tourner autour d'un axe vertical, dans lequel le grillage (3) comprend un pivot sur lequel le panier (2) peut tourner, une pluralité de poutres (8) s'étendant radialement à partir dudit pivot, ainsi qu'une pluralité de poutres de support (8) connectées auxdites poutres s'étendant radialement, ladite pluralité de poutres de support étant sensiblement parallèles à l'une desdites poutres s'étendant radialement, le panier (2) comprend un noyau intérieur agencé pour tourner sur le pivot du grillage (3), des poutres inférieures réglables s'étendant radialement à partir dudit noyau intérieur et d'un mur de si comprenant une pluralité de poutres s'étendant verticalement, chaque poutre étant montée à une extrémité de l'une desdites poutres inférieures réglables, dans lequel un diamètre dudit système de carrousel à panier modulaire réglable est réglable entre au moins un premier diamètre et un deuxième diamètre plus grand que ledit premier diamètre, dans lequel le grillage (3) comprend un pivot sur lequel le panier (2) peut tourner, une pluralité de poutres (8) s'étendant radialement depuis ledit pivot, ainsi que une pluralité de poutres de support connectées auxdites poutres s'étendant radialement, ladite pluralité de poutres de support étant sensiblement parallèle à l'une desdites poutres s'étendant radialement, dans lequel un diamètre du système est réglable en étendant au moins l'une de ladite pluralité de poutres s'étendant radialement (8), et/ou au moins l'une de ladite pluralité de poutres de support.

12. Système de carrousel à panier modulaire réglable selon la revendication 11, dans lequel le diamètre du système est réglable en montant des éléments d'extension aux extrémités d'une ou plusieurs desdites poutres s'étendant radialement depuis ledit pivot, d'une ou plusieurs desdites poutres de support, et/ou d'une ou plusieurs desdites poutres inférieures réglables.

13. Procédé d'installation d'un système de carrousel à panier modulaire réglable selon l'une quelconque des revendications 1 à 10, le procédé comprenant l'étape consistant à, disposer le système dans un conteneur adapté au transport routier et/ou maritime, avant assemblage du système, en adaptant une longueur maximale des différentes poutres de manière à pouvoir s'insérer dans un tel conteneur.
